# FASCICULE DE BREVET EUROPEEN

(11) **EP 2 581 436 B1**
(45) Date de publication et mention de la délivrance du brevet: **15.03.2017**
(21) Numéro de dépôt: 12290333.9
(22) Date de dépôt: 08.10.2012
(51) Int. Cl.: C10G 2/00, C10G 45/02, C10G 45/58, C10G 47/00, C10G 65/04, C10J 3/00, C10G 3/00, B01J 21/12, B01J 23/42, B01J 35/00, B01J 35/10, C10G 33/00, C10G 33/04, C10G 45/04, C10G 65/12, C10G 67/02, C10G 67/06

(54) **Procédé de production de distillats moyens à partir d'un melange d'une charge issue de sources renouvelables et d'un effluent paraffinique**
Herstellungsverfahren von Mitteldestillaten aus einer Mischung einer aus erneuerbaren Energiequellen stammenden Charge und einem Paraffin-Abfallprodukt
Method for producing middle distillates from a mixture of a feedstock from renewable sources and a paraffinic effluent

(30) Priorité: 14.10.2011 FR 1103150
(43) Date de publication de la demande: 17.04.2013
(73) Titulaire: IFP Énergies nouvelles, 92852 Rueil-Malmaison Cedex (FR)
(72) Inventeur: Bloch, Michel, 78290 Croissy sur Seine (FR); Fedou, Stéphane, 75002 Paris (FR); Chapus, Thierry, 69001 Lyon (FR); Bouchy, Christophe, 69007 Lyon (FR)

(56) Documents cités:
- FR-A1- 2 943 071
- US-A1- 2011 155 631
- US-A1- 2011 180 455

## Description

### DOMAINE DE L'INVENTION

La présente invention concerne un procédé de production de distillats moyens à partir d'une part d'une charge paraffinique produite par synthèse Fischer-Tropsch selon des procédés connus de l'homme du métier, traitée dans un procédé incluant une étape d'hydrotraitement en mélange avec une charge issue d'une source renouvelable, suivie d'une étape d'hydroisomérisation/hydrocraquage et d'une distillation finale.

### ETAT DE L'ART ANTÉRIEUR

Dans un contexte international marqué par la croissance rapide en besoin de carburants, en particulier de bases gazoles dans la communauté européenne, la recherche de nouvelles sources d'énergie, de préférence renouvelables, pouvant être intégrées au schéma traditionnel du raffinage et de la production de carburants constitue un enjeu majeur.

A ce titre, l'intégration dans le processus de raffinage de nouveaux produits d'origine végétale ou animale, issus de la conversion de la biomasse lignocellulosique ou issus de la production d'huiles végétales ou de graisses animales, a connu ces dernières années un très vif regain d'intérêt en raison de l'augmentation du coût des matières fossiles. De même, les biocarburants traditionnels (éthanol ou esters méthyliques d'huiles végétales principalement) ont acquis un réel statut de complément aux carburants de type pétroliers dans les pools carburants.

Plusieurs procédés sont connus pour produire des carburants liquides à partir de produits issus de sources renouvelables, c'est-à-dire issus de la biomasse. Une des approches existantes repose sur la réaction de transestérification avec un alcool comme le méthanol conduisant aux esters méthyliques d'huiles végétales (EMHV) couramment appelés biodiesel. Cependant, les charges utilisables dans ce type de procédé doivent être soigneusement sélectionnées, si bien qu'un certain nombre d'huiles végétales ne peuvent être traitées de cette manière. Enfin, les propriétés à froid de ces produits constituent également un facteur limitant.

La gazéification de la biomasse a également été utilisée depuis plusieurs années pour convertir la biomasse en sources d'énergie. Sous des conditions contrôlées caractérisées par un faible apport en oxygène et de hautes températures, la plupart des charges issues de la biomasse peut être convertie en mélanges gazeux connu sous le nom de gaz de synthèse.

Les gaz de synthèse issus à la fois de sources renouvelables et de sources fossiles peuvent être utilisés pour produire des carburants liquides via le procédé de synthèse Fischer-Tropsch.

Une autre approche consiste à exploiter directement les produits issus de sources renouvelables et en particulier les huiles végétales via leur transformation en dérivés d'acides gras élémentaires, grâce à des procédés d'hydro-raffinage ou d'hydroconversion dont les catalyseurs sont également bien connus de l'homme de l'art pour leurs propriétés d'hydrodéoxygénation (E. Laurent, B. Delmon, Appl. Catal. A 109 (1) 1994 77-96 et 97-115). En effet, lesdites huiles végétales sont constituées d'acides gras sous forme de triglycérides, ayant de longues chaînes alkyles dont la structure correspond aux paraffines normales des coupes gazoles (longueur de chaîne de 12 à 24 atomes de carbone, selon la nature de l'huile végétale). Dans ce cas, les triglycérides sont convertis en dérivés principalement paraffiniques et saturés, constituant alors d'excellentes bases carburant, en particulier pour le pool gazole du fait de leurs bons indices de cétane.

Malgré les recherches en cours sur la valorisation des ressources renouvelables pour la production de carburant, il existe toujours un fort besoin pour l'industrie du raffinage du pétrole de traiter ces bio-ressources, si possible au moindre coût et en tenant compte des unités existantes. Il existe également un besoin d'utiliser des déchets ou résidus industriels proches du site de production pour diminuer les couts élevés de transport et de stockage.

US2011/0155631 divulgue un procédé de production de distillats moyens.

Un objet de la présente invention est de fournir un procédé de production de distillats moyens par l'intégration industrielle d'un procédé de synthèse Fischer-Tropsch produisant un effluent paraffinique et un procédé d'hydrotraitement d'une charge issue d'une source renouvelable en mélange avec ledit effluent paraffinique issu de la synthèse Fischer-Tropsch.

### RÉSUMÉ DE L'INVENTION

L'invention telle que définie dans la revendication 1 concerne un procédé de production de distillats moyens à partir de charges issues, en tout ou partie, de sources renouvelables caractérisé en ce que ledit procédé comprend au moins les étapes suivantes :
a) la production d'un premier effluent paraffinique par le procédé Fischer-Tropsch à partir d'un gaz de synthèse (CO+H₂),
b) l'hydrotraitement d'au moins une partie dudit premier effluent paraffinique issu de l'étape a), en mélange avec une charge issue de source renouvelable, en présence d'hydrogène et d'un catalyseur d'hydrotraitement, à une température comprise entre 150 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 150 et 1500 NI d'hydrogène par litre de charge,
c) l'élimination d'au moins une partie de l'eau de l'effluent issu de l'étape b) d'hydrotraitement,
d) l'hydroisomérisation/hydrocraquage de l'effluent issue de l'étape c) en présence d'hydrogène et d'un catalyseur d'hydroisomérisation/hydrocraquage,
e) la distillation de l'effluent issu de l'étape d) d'hydroisomérisation/hydrocraquage pour séparer au moins une fraction distillats moyens.

Un avantage de la présente invention est de fournir un procédé de production de distillats moyens, permettant d'obtenir un rendement amélioré en distillats moyens, à partir du traitement en mélange d'une charge issue de la biomasse et d'un effluent paraffinique produit par le procédé Fischer-Tropsch , par l'intégration industrielle de deux procédés séparés de production de distillats moyens.

Un autre avantage de la présente invention est de permettre une gestion améliorée de l'exothermie associée à l'étape b) d'hydrotraitement de la charge issue de source renouvelable par le mélange de ladite charge issue d'une source renouvelable avec ledit premier effluent paraffinique produit par la synthèse Fischer-Tropsch à basse température.

Dans le domaine de l'hydrocraquage des cires de Fischer-Tropsch il est connu que la présence de composés oxygénés dans la charge à hydrocraquer a un impact négatif sur les performances du catalyseur d'hydrocraquage. Le brevet EP 0 583 836 B2 enseigne l'utilisation d'un procédé pour la préparation de gazole mettant en oeuvre a) une étape d'hydrotraitement de la charge hydrocarbonée issue de la synthèse de Fischer-Tropsch pour saturer les oléfines de la charge et décomposer les produits oxygénés présents, suivie d'une étape (b) d'élimination de la fraction C₄⁻ de la charge hydrotraitée et d'une étape c) d'hydrocraquage d'au moins une partie de l'effluent hydrocarboné issue de l'étape b). Il est enseigné que la mise en oeuvre des étapes (a) et (b) permet de prolonger la durée de vie du catalyseur d'hydroconversion de l'étape (c) ainsi que la sélectivité du catalyseur envers la production de gazole.

Un autre avantage de la présente invention est de permettre une amélioration des performances du catalyseur d'hydroisomérisation/hydrocraquage par la mise en oeuvre d'une étape d'hydrotraitement commune de ladite charge issue d'une source renouvelable et dudit effluent paraffinique produit par le procédé Fischer Tropsch, suivie d'une étape d'élimination de l'eau, et éventuellement des impuretés gazeuses produites lors de l'étape d'hydrotraitement. En effet, ceci permet d'envoyer une charge paraffinique substantiellement exempte de composés insaturés et d'impuretés dans l'étape d) d'hydrocraquage/hydroisomérisation.

Un autre avantage de la présente invention est, du fait du traitement de la totalité d'un effluent paraffinique issu de la synthèse Fischer-Tropsch en mélange avec une charge issue de source renouvelable, de limiter la mise en oeuvre d'étapes de fractionnement et ainsi de limiter le coût opératoire du procédé selon l'invention.

### DESCRIPTION DETAILLEE DE L'INVENTION

Conformément à l'invention, l'étape a) du procédé selon l'invention consiste en la production d'un effluent paraffinique par le procédé Fischer Tropsch à partir d'un gaz de synthèse (CO+H₂).

Le terme "gaz de synthèse" se réfère de manière connue à un mélange contenant une quantité variable de monoxyde de carbone et d'hydrogène générés par la gazéification de substance contenant du carbone et de l'hydrogène.

Dans le procédé Fischer-Tropsch basse température, le gaz de synthèse est transformé catalytiquement en produits oxygénés et en hydrocarbures essentiellement linéaires sous forme gazeuse, liquide ou solide. Le procédé Fischer-Tropsch mis en oeuvre dans le procédé selon la présente invention pour produire ledit effluent paraffinique est connu de l'homme du métier et mis en oeuvre en présence d'un catalyseur et dans des conditions opératoires classiques telles que par exemple celles décrites dans les ouvrages Studies in Surface Science and Catalysis, 152 (2004), Fischer Tropsch Technology, éditions Elsevier et Studies in Surface Science and Calalysis, 163 (2007), Fischer-Tropsch Synthesis, Catalyst and Catalysis, éditions Elsevier.

Conformément à l'invention, la charge paraffinique synthétisée par synthèse Fischer-Tropsch est produite à partir d'un gaz de synthèse (CO+H₂).

Ledit gaz de synthèse (CO+H₂) peut avantageusement être produit à partir de toute source de carbone et d'hydrogène. De préférence, ledit gaz de synthèse est produit selon trois voies :

Dans un mode de réalisation préféré, le gaz de synthèse (CO+H₂) est produit à partir de gaz naturel selon la voie GTL aussi appelée selon la terminologie anglo-saxonne gas- to-liquid.

Dans un autre mode de réalisation préféré, le gaz de synthèse (CO+H₂) est produit à partir de charbon selon la voie CTL aussi appelée selon la terminologie anglo-saxonne coal- to-liquid.

Dans un autre mode de réalisation préféré, le gaz de synthèse (CO+H₂) est produit à partir de biomasse selon la voie BTL aussi appelée selon la terminologie anglo-saxonne biomass- to-liquid. Dans un autre mode de réalisation préféré, le gaz de synthèse (CO+H₂) est produit à partir de résidus pétroliers.

Dans un mode de réalisation très préféré, ledit gaz de synthèse (CO+H₂) est produit à partir d'un mélange de gaz naturel, de charbon, de biomasse et/ou de résidus pétroliers.

Dans le cas ou ledit gaz de synthèse (CO+H₂) est produit à partir de biomasse selon la voie BTL, ledit procédé selon l'invention est un procédé de production de distillats moyens à partir de charges issues, en totalité de sources renouvelables.

Dans ce cas, la charge issue de la biomasse qui est gazéifiée pour produire ledit gaz de synthèse est avantageusement choisie parmi les produits de la biomasse lignocellulosique tels que le bois et les déchets végétaux ou les produits issus de la conversion de la biomasse lignocellulosique. Les produits issus de la conversion de la biomasse lignocellulosique sont choisis parmi les résidus d'exploitation agricole tels que la paille, la bagasse de canne à sucre ou tout autre type de résidus ligneux, les résidus d'exploitation forestière tels que les produits résultant de la première éclaircie des forêts, les produits de l'exploitation forestière tels que les copeaux de bois, les résidus de scieries, les cultures dédiées telles que par exemple les taillis à courte rotation.

Ladite charge issue de la biomasse, de type lignocellulosique peut être disponible à l'état de copeaux de dimension typique comprise entre 0,5 cm et 2 cm, et avec une teneur en eau comprise entre 10% et 40% poids. Ainsi, ladite charge issue de la biomasse, de type lignocellulosique peut éventuellement être prétraitée en vue d'être gazéifiée selon des méthodes connues de l'homme du métier telles que par exemple par torréfaction et/ou pyrolyse. En particulier, ladite charge issue de la biomasse peut éventuellement être préparée en vue d'être gazéifiée comme décrit dans le brevet FR 1 890 080. Ledit effluent paraffinique produit par synthèse Fischer-Tropsch selon l'étape a) du procédé selon l'invention comprend majoritairement des n-paraffines. Ainsi, ledit effluent paraffinique produit par synthèse Fischer-Tropsch comprend une teneur en n-paraffines supérieure à 60% poids par rapport à la masse totale dudit effluent. Ledit effluent peut également comprendre une teneur en produits oxygénés de préférence inférieure à 10% poids, une teneur en insaturés, c'est-à-dire de préférence en produits oléfiniques, de préférence inférieure à 20% en poids et une teneur en iso-paraffines de préférence inférieure à 10% en poids par rapport à la masse totale dudit effluent.

De manière très préférée, ledit effluent paraffinique comprend une teneur en n-paraffines supérieure à 70% poids et de manière encore plus préférée supérieure à 80% poids par rapport à la masse totale dudit effluent.

De préférence, ledit effluent paraffinique produit par synthèse Fischer-Tropsch est exempt d'impuretés hétéroatomiques telles que, par exemple, le soufre, l'azote ou des métaux.

Conformément à l'étape b) du procédé selon l'invention, au moins une partie et de préférence la totalité dudit effluent paraffinique issu de l'étape a) subit une étape d'hydrotraitement, en mélange avec une charge issue de source renouvelable, en présence d'hydrogène et d'un catalyseur d'hydrotraitement, à une température comprise entre 150 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 150 et 1500 NI d'hydrogène par litre de charge.

Ledit effluent paraffinique issu de l'étape a) n'est pas fractionné et de manière préférée, ne subit aucune étape de distillation ou de fractionnement avant d'etre introduit dans l'étape b) d'hydrotraitement.

On entend par étape de distillation ou de fractionnement une étape permettant de séparer ledit effluent paraffinique en coupe de poids moléculaire différents.

Ledit effluent paraffinique issu de l'étape a) peut éventuellement être divisé en au moins deux effluents. Au moins une partie dudit effluent paraffinique issu de l'étape a) qui n'est pas envoyé dans l'étape b) d'hydrotraitement est envoyé dans l'étape d) d'hydroisomérisation / hydrocraquage.

Le rapport massique dudit effluent paraffinique produit par synthèse Fischer-Tropsch selon l'étape a) sur ladite charge issue de source renouvelable introduite dans l'étape b) d'hydrotraitement est avantageusement compris entre 0,05 et 20 et de préférence entre 0,1 et 10.

Ladite charge issue de source renouvelable est choisie parmi les huiles et graisses d'origine végétale, animale, les huiles de poissons contenant des triglycérides et/ou des acides gras et les produits issus de la conversion de la biomasse lignocellulosique contenant une teneur supérieure à 80% poids d'acides gras libres, d'esters et de glycérides ou des mélanges de telles charges. Les huiles végétales utilisées dans la présente invention peuvent être brutes ou raffinées, totalement ou en partie, et issues des végétaux choisis parmi le colza, le tournesol, le soja, le palme, le palmiste, le ricin, l'olive, la noix de coco et le jatropha, cette liste n'étant pas limitative. Les graisses animales sont avantageusement choisies parmi le lard, le suif ou les graisses composées de résidus de l'industrie alimentaire ou issus des industries de la restauration telles que par exemple les huiles de fritures usagées. Les produits issus de la conversion de la biomasse lignocellulosique sont avantageusement choisis parmi les sous produits de production de pâte à papier qui on été distillé tels que par exemple la matière grasse issue du tall-oil distillé selon la terminologie anglo-saxonne.

Ladite charge ainsi définie contient des structures glycérides, esters et/ou acides gras, dont les chaînes grasses contiennent un nombre d'atomes de carbone compris entre 8 et 30.

Ladite charge issue de source renouvelable peut éventuellement subir, préalablement à l'étape a) du procédé selon l'invention, une étape de pré-traitement ou pré-raffinage de façon à éliminer, par un traitement approprié, des contaminants tels que des métaux, comme les composés alcalins par exemple, les alcalino-terreux et le phosphore. Des traitements appropriés peuvent par exemple être des traitements sur des résines échangeuses d'ions, thermiques et/ou chimiques bien connus de l'homme du métier.

Le catalyseur d'hydrotraitement utilisé dans l'étape b) du procédé selon l'invention est de préférence utilisé en lit fixe. De préférence, ledit catalyseur d'hydrotraitement comprend une fonction hydro-déshydrogénante comprenant au moins un métal du groupe VIII et/ou du groupe VIS, pris seul ou en mélange et un support choisi dans le groupe formé par l'alumine, la silice, les silices-alumines, la magnésie, les argiles et les mélanges d'au moins deux de ces minéraux. Ledit support peut également avantageusement renfermer d'autres composés choisis parmi les oxydes de préférence choisis parmi l'oxyde de bore, la zircone, l'oxyde de titane, l'anhydride phosphorique. Le support préféré est un support d'alumine et de manière très préférée de l'alumine η, δ ou y.

Ledit catalyseur comprend des métaux du groupe VIII de préférence choisis parmi le nickel et le cobalt, pris seul ou en mélange, de préférence en association avec au moins un métal du groupe VIS de préférence choisi parmi le molybdène et le tungstène, pris seul ou en mélange. De façon préférée on utilise un catalyseur de type NiMo.

La teneur en oxydes de métaux des groupes VIII et de préférence en oxyde de nickel est avantageusement comprise entre 0,5 et 10% en poids d'oxyde de nickel (NiO) et de préférence entre 1 et 5% en poids d'oxyde de nickel et la teneur en oxydes de métaux des groupes VIS et de préférence en trioxyde de molybdène est avantageusement comprise entre 1 et 30% en poids d'oxyde de molybdène (MoO₃), de préférence de 5 à 25% en poids, les pourcentages étant exprimés en % poids par rapport à la masse totale du catalyseur.

La teneur totale en oxydes de métaux des groupes VIB et VIII dans le catalyseur utilisé est avantageusement comprise entre 5 et 40% en poids et de manière préférée comprise entre 6 et 30% en poids par rapport à la masse totale du catalyseur.

Le rapport pondéral exprimé en oxyde métallique entre métal (ou métaux) du groupe VIB sur métal (ou métaux) du groupe VIII est avantageusement compris entre 20 et 1 et de manière préférée entre 10 et 2.

Ledit catalyseur d'hydrotraitement utilisé dans l'étape b) du procédé selon l'invention doit être avantageusement caractérisé par un fort pouvoir hydrogénant de façon à orienter le plus possible la sélectivité de la réaction vers une hydrogénation conservant le nombre d'atomes de carbone des chaînes grasses c'est à dire la voie hydrodéoxygénation, ceci afin de maximiser le rendement en hydrocarbures entrant dans le domaine de distillation des gazoles et/ou des kérosènes. C'est pourquoi de manière préférée, on opère à une température relativement basse. Maximiser la fonction hydrogénante permet également de limiter les réactions de polymérisation et/ou de condensation conduisant à la formation de coke qui dégraderait la stabilité des performances catalytiques.

Ledit catalyseur peut également avantageusement contenir un élément dopant choisi parmi le phosphore et le bore, pris seuls ou en mélange. Ledit élément dopant peut être introduit dans la matrice ou de préférence être déposé sur le support. On peut également déposer du silicium sur le support, seul ou avec le phosphore et/ou le bore et/ou le fluor.

La teneur en poids d'oxyde dudit élément dopant est avantageusement inférieure à 20% et de manière préférée inférieure à 10% et elle est avantageusement d'au moins 0.001% par rapport à la masse totale du catalyseur.

Lors de l'hydrotraitement les réactions subies par la charge contenant les triglycérides sont les suivantes:
- la réaction d'hydrogénation des insaturations des chaînes hydrocarbonées des acides gras des triglycérides et esters,
- les réactions de désoxygénations selon deux voies réactionnelles :
   a) l'hydrodéoxygénation (HDO) conduisant à la formation d'eau par consommation d'hydrogène et à la formation d'hydrocarbures de nombre de carbone (Cn) égal à celui des chaînes d'acides gras initiales,
   b) la décarboxylation/décarbonylation conduisant à la formation d'oxydes de carbone (monoxyde et dioxyde de carbone : CO et CO₂ et à la formation d'hydrocarbures comptant un carbone en moins (Cn-1) par rapport aux chaînes d'acides gras initiales.

Selon une variante préférée, on utilisera les catalyseurs tels que décrits dans la demande de brevet FR 2 943 071 décrivant des catalyseurs ayant une forte sélectivité pour les réactions d'hydrodéoxygénation.

Selon une autre variante préférée, on utilisera les catalyseurs tels que décrit dans la demande de brevet EP 2 210 663 décrivant des catalyseurs supportés ou massiques comprenant une phase active constituée d'un élément sulfuré du groupe VIB, l'élément du groupe VIB étant le molybdène.

De préférence, l'étape b) du procédé selon l'invention opère à une température comprise entre 180 et 350°C, de manière préférée entre 220 et 320°C, de manière encore plus préférée entre 220 et 310°C, à une pression comprise entre 1 MPa et 6 MPa et de manière encore plus préférée entre 1 MPa et 4 MPa. La charge est mise au contact du catalyseur en présence d'hydrogène. La quantité totale d'hydrogène mélangée à la charge est telle que le ratio hydrogène/charge est de préférence compris entre 150 et 1500 normaux litres d'hydrogène par litre de charge et de manière encore plus préféré compris entre 150 et 1300 normaux litres d'hydrogène par litre de charge.

Selon un mode de réalisation préféré, ladite étape b) d'hydrotraitement selon l'invention est avantageusement mise en oeuvre dans un réacteur comprenant au moins une zone catalytique et permettant l'injection étagée de charge comme cela est décrit dans la demande de brevet EP 2 226 375.

L'effluent issu de l'étape b) d'hydrotraitement peut avantageusement être soumis à au moins une étape de séparation permettant de séparer une fraction gazeuse contenant l'hydrogène, le CO, le CO₂, l'H₂S, le NH₃ et les gaz légers et une fraction liquide contenant les hydrocarbures paraffiniques. Ladite étape de séparation peut avantageusement être effectuée en une seule étape par un séparateur haute température haute pression opérant sans réduction de pression à une température comprise entre 145°C et 280°C.

Ladite étape de séparation peut également avantageusement comprendre une séparation en deux étapes sans réduction de pression, la première séparation étant effectuée à une température comprise entre 145°C et 280°C dans un séparateur à haute température, la deuxième étant effectuée à une température comprise entre 25°C et 100°C dans un séparateur à basse température. Conformément à l'étape c) du procédé selon l'invention, l'effluent issu de l'étape d'hydrotraitement, ayant éventuellement subi une étape de séparation gaz/liquide, subit une étape d'élimination d'au moins une partie et de préférence la totalité restante de l'eau formée lors des réactions d'hydrodésoxygénation qui ont lieu lors de l'étape b) d'hydrotraitement.

L'élimination plus ou moins complète de l'eau est avantageusement fonction de la tolérance à l'eau du catalyseur d'hydrocraquage/hydroisomérisation utilisé en aval. L'élimination de l'eau peut avantageusement être réalisée par toutes les méthodes et techniques connues de l'homme du métier, telles que par exemple par séchage, passage sur un desséchant, flash, extraction par solvant, distillation et décantation ou par association d'au moins deux de ces méthodes.

Conformément à l'étape d) du procédé selon l'invention, l'effluent issu de l'étape c) d'élimination d'eau et ayant éventuellement subi au moins une étape de séparation, subit une étape d'hydroisomérisation/hydrocraquage en présence d'hydrogène et d'un catalyseur d'hydroisomérisation/hydrocraquage.

Une partie de l'effluent paraffinique issu de l'étape a) qui n'est pas envoyé dans l'étape b) d'hydrotraitement peut éventuellement être envoyé dans l'étape d) d'hydroisomérisation/hydrocraquage.

Dans le cas où ledit effluent paraffinique issu de l'étape a) qui n'est pas envoyé dans l'étape b) d'hydrotraitement est envoyé dans l'étape d) d'hydroisomérisation/hydrocraquage, ledit effluent subit avantageusement une étape de traitement, de préférence par passage sur un lit de garde.

De préférence, l'étape d) d'hydroisomérisation/hydrocraquage du procédé selon l'invention opère à une température comprise entre 200 et 450°C et préférentiellement de 250°C à 450°C, de manière préférée, entre 300 à 450°C, et de manière plus préférée entre 320-420°C, à une pression comprise entre 0,2 et 15 MPa et de préférence entre 0,5 et 10 MPa et de manière préférée entre 1 et 9 MPa, à une vitesse spatiale comprise entre 0,1 h⁻¹ et 10 h⁻¹ et de préférence entre 0,2 et 7 h⁻¹, de manière très préférée entre 0,5 et 5,0 h⁻¹ et à un ratio hydrogène/charge compris entre 100 et 2000 normaux litres d'hydrogène par litre de charge et préférentiellement entre 150 et 1500 normaux litres d'hydrogène par litre de charge.

L'étape d) hydroisomérisation/hydrocraquage du procédé selon l'invention est avantageusement conduite dans des conditions telles que la conversion par passe en produits à points d'ébullition supérieurs ou égaux à 370°C en des produits ayant des points d'ébullition inférieurs à 370°C est supérieure à 60% poids, et de façon encore plus préférée d'au moins 80% de préférence supérieure à 85%.

La majorité des catalyseurs utilisés actuellement en hydroisomérisation / hydrocraquage sont du type bifonctionnels associant une fonction acide à une fonction hydrogénante. La fonction acide est généralement apportée par des supports de grandes surfaces (150 à 800 m².g⁻¹ généralement) présentant une acidité superficielle, telles que les alumines halogénées (chlorées ou fluorées notamment), les alumines phosphorées, les combinaisons d'oxydes de bore et d'aluminium, les silices alumines. La fonction hydrogénante est généralement apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI tels que chrome, molybdène et tungstène et au moins un métal du groupe VIII.

Dans le cas des catalyseurs bi-fonctionnels, l'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs et sélectifs envers l'isomérisation alors qu'une fonction acide forte et une fonction hydrogénante faible donnent des catalyseurs très actifs et sélectifs envers le craquage. Une troisième possibilité est d'utiliser une fonction acide forte et une fonction hydrogénante forte afin d'obtenir un catalyseur très actif mais également très sélectif envers l'isomérisation. Il est donc possible, en choisissant judicieusement chacune des fonctions d'ajuster le couple activité/sélectivité du catalyseur.

Le catalyseur d'hydrocraquage/hydroisomérisation utilisé dans le procédé selon l'invention, comprend une silice-alumine particulière. Ledit catalyseur comprend (et de préférence est essentiellement constitué de) 0,05 à 10% en poids et de préférence comprise entre 0,1 et 5% poids d'au moins un métal noble du groupe VIII, de préférence choisis parmi le platine et le palladium et de manière préféré, ledit métal noble étant le platine, déposé sur un support silice-alumine, sans aucun liant, contenant une quantité de silice (SiO2) comprise entre 1 et 95%, exprimée en pourcentage poids, de préférence entre 5 et 95%, de manière préférée entre 10 et 80% et de manière très préférée entre 20 et 70% et de manière encore plus préférée entre 22 et 45%, ledit catalyseur présentant :
une surface spécifique BET de 100 à 500 m2/g, de préférence comprise entre 200 m2/g et 450 m2/g et de manière très préférée entre 250 m2/g et 450 m2/g,
   - un diamètre moyen des mésopores compris entre 3 et 12 nm, de préférence compris entre 3 nm et 11 nm et de manière très préférée entre 4 nm et 10,5 nm,
   - un volume poreux des pores dont le diamètre est compris entre le diamètre moyen tel que défini précédemment diminué de 3 nm et le diamètre moyen tel que défini précédemment augmenté de 3 nm est supérieur à 40% du volume poreux total, de manière préférée compris entre 50% et 90% du volume poreux total et de manière très préférée compris entre 50% et 70% du volume poreux total,
   - un volume poreux total compris entre 0,4 et 1,2 ml/g, de préférence entre 0,5 et 1,0 ml/g et de manière très préférée entre 0,5 et 0,9 ml/g,
   - un volume des macropores, dont le diamètre est supérieur à 50 nm, et de préférence compris entre 100 nm et 1000 nm, représentant entre 5 et 60% du volume poreux total, de préférence entre 10 et 50% du volume poreux total et de manière encore plus préférée entre 10 et 40% du volume poreux total,
   - une teneur en composés alcalins ou alcalino-terreux inférieure à 300 ppm poids et de préférence inférieure à 200 ppm poids.

Le diamètre moyen des mésopores est défini comme étant le diamètre correspondant à l'annulation de la courbe dérivée du volume d'intrusion du mercure obtenue à partir de la courbe de porosité au mercure pour des diamètres de pores compris entre 2 et 50 m. Le diamètre moyen des mésopores du catalyseur est avantageusement mesuré à partir du profil de répartition poreuse obtenu à l'aide d'un porosimètre au mercure.

De préférence, la dispersion du métal dudit catalyseur préféré est avantageusement comprise entre 20% et 100%, de manière préférée entre 30% et 100% et de manière très préférée entre 40 et 100%. La dispersion, représentant la fraction de métal accessible au réactif par rapport à la quantité totale de métal du catalyseur, est avantageusement mesurée, par exemple, par titrage H2/O2 ou par microscopie électronique à transmission.

De préférence, le coefficient de répartition du métal noble dudit catalyseur préféré est supérieur à 0,1, de préférence supérieur à 0,2 et de manière très préférée supérieur à 0,4. La répartition du métal noble représente la distribution du métal à l'intérieur du grain de catalyseur, le métal pouvant être bien ou mal dispersé. Ainsi, il est possible d'obtenir le platine mal réparti (par exemple détecté dans une couronne dont l'épaisseur est nettement inférieure au rayon du grain) mais bien dispersé c'est-à-dire que tous les atomes de platine, situés en couronne, seront accessibles aux réactifs. Le coefficient de répartition du métal noble peut être mesuré par microsonde de Castaing.

Le sel de métal noble est avantageusement introduit par une des méthodes usuelles utilisées pour déposer le métal à la surface d'un solide. Une des méthodes préférées est l'imprégnation à sec qui consiste en l'introduction du sel de métal dans un volume de solution qui est égal au volume poreux de la masse de solide à imprégner. Avant l'opération de réduction, le catalyseur peut avantageusement subir une calcination comme par exemple un traitement sous air sec à une température de 300 à 750°C et de préférence à une température égale à 520°C, pendant 0,25 à 10 heures et de préférence pendant 2 heures.

De préférence, la dispersion dudit catalyseur utilisé dans l'étape d) du procédé selon l'invention est avantageusement comprise entre 20% et 100%, de manière préférée entre 30% et 100% et de manière très préférée entre 40 et 100.

De préférence, le coefficient de répartition du métal noble dudit catalyseur préféré utilisé dans l'étape d) du procédé selon l'invention est supérieur à 0,1, de préférence supérieur à 0,2 et de manière très préférée supérieur à 0,4. Ce coefficient de répartition est mesuré par microsonde de Castaing.

Avantageusement, les caractéristiques associées au catalyseur correspondant sont identiques à celles de la silice alumine décrite ci-dessus.

Conformément à l'étape e) du procédé selon l'invention, l'effluent issue de l'étape d) d'hydroisomérisation/hydrocraquage subit une étape de distillation dans le but de séparer au moins une fraction distillats moyens.

Ladite étape de distillation intègre de préférence une distillation atmosphérique et éventuellement une distillation sous vide. Une fraction résiduelle dont le point initial d'ébullition est généralement supérieur à au moins 340°C et de préférence supérieur ou égal à au moins 370°C est également avantageusement séparée. Une fraction gaz légers C₁-C₄ et au moins une fraction essence (ou naphta) sont également avantageusement séparées. De préférence, la fraction résiduelle, dont le point initial d'ébullition est généralement supérieur à au moins 340°C et de préférence supérieur ou égal à au moins 370°C est recyclée dans l'étape d) d'hydroisomérisation/hydrocraquage du procédé selon l'invention. Selon un autre mode de réalisation de l'étape e) du procédé selon l'invention, ladite fraction résiduelle peut fournir d'excellentes bases pour les huiles.

### DESCRIPTION DES FIGURES

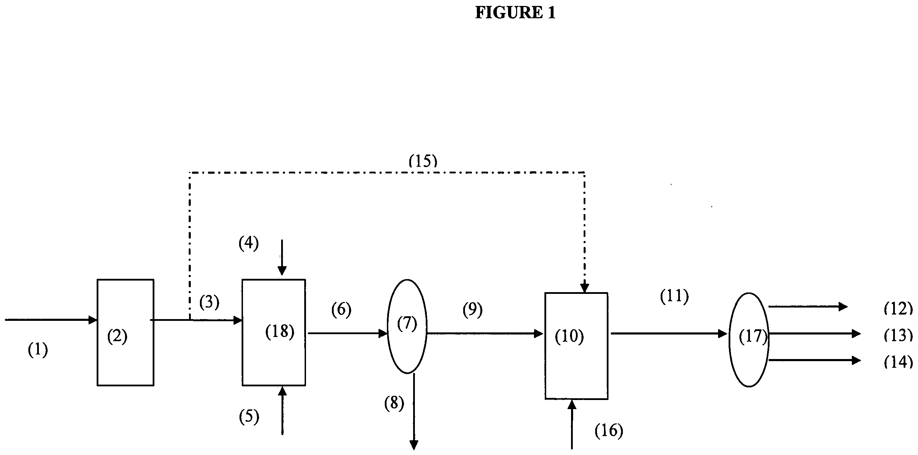

La Figure 1 représente un schéma de procédé conforme à l'invention.

Le gaz de synthèse (CO+H₂) est introduit dans une unité (2) via la conduite (1) dans laquelle le procédé Fischer-Tropsch est mis en oeuvre pour produire un effluent paraffinique qui sort de l'unité via la conduite (3). Au moins une partie dudit effluent paraffinique est ensuite introduit en mélange avec une charge issue de source renouvelable via la conduite (5), en présence d'hydrogène (4) dans une zone d'hydrotraitement (18). L'effluent issu de la zone d'hydrotraitement est ensuite envoyé dans une zone (7) d'élimination d'au moins une partie de l'eau via la conduite (6). L'eau est éliminée via la conduite (8) et l'effluent issu de la zone (7) est envoyé dans une zone d'hydroisomérisation/hydrocraquage (10) en présence d'hydrogène introduit via la conduite (16). Une partie de l'effluent paraffinique issu de la zone (2) est envoyée dans via la conduite (15). L'effluent issu de la zone d'hydroisomérisation/hydrocraquage est ensuite envoyé via la conduite (10) dans une zone de distillation (17) pour séparer au une fraction essence (12), une fraction distillats moyens (13) et une fraction résidu (14).

L'exemple qui suit illustre l'invention sans toutefois en limiter sa portée.

### EXEMPLE

### Exemple selon l'invention :

### Étape a)

Un premier effluent paraffinique produit par le procédé Fischer-Tropsch à partir d'un gaz de synthèse (CO+H₂), ledit gaz de synthèse étant produit à partir de gaz naturel selon la voie GTL.

Les principales caractéristiques de l'effluent paraffinique issue du procédé Fischer-Tropsch à basse température sur un catalyseur au cobalt et selon les conditions décrites dans Studies in Surface Science and Catalysis, 152 (2004), Fischer Tropsch Technology, éditions Elsevier et Studies in Surface Science and Calalysis, 163 (2007), Fischer-Tropsch Synthesis, Catalyst and Catalysis, éditions Elsevier, sont regroupées dans le tableau 1.

**Tableau 1 : Caractéristiques de l'effluent paraffinique issue de la synthèse Fischer-Tropsch**

| | |
|---|---|
| Densité à 15°C (kg/m³) | 781,9 |
| Oxygène (% poids) | 0,7 |
| Hydrogène (% poids) | 15,1 |
| Soufre (ppm poids) | < 2 |
| Azote (ppm poids) | < 2 |

| Distillation simulée (% poids) | |
|---|---|
| % m/m 150°C⁻ | 9,9 |
| % m/m 150 - 370°C | 65,4 |
| %m/m de 370°C+ | 24,7 |

### Étape b)

La charge issue de source renouvelable que l'on se propose de traiter est une huile de jatropha semi-raffinée, dont les principales caractéristiques sont rassemblées dans le tableau 2.

**Tableau 2 : Caractéristiques de la charge traitée (huile de jatropha semi-raffinée)**

| Charge issue de source renouvelable | Huile de jatropha semi-raffinée |
|---|---|
| Densité à 15°C (kg/m³) | 923.5 |
| Oxygène (% poids) | 11.0 |
| Hydrogène (% poids) | 11.4 |
| Soufre (ppm poids) | 4 |
| Azote (ppm poids) | 29 |
| Indice d'iode (g l2/100 g) | 95 |
| Phosphore (ppm poids) | 52 |
| Magnésium (ppm pds) | 23 |
| Calcium (ppm pds) | 35 |
| Sodium (ppm pds) | 8 |
| Répartition en acides gras (% pds) | |
| C14:0 | 0.1 |
| C15:0 | 0 |
| C16:0 | 15.1 |
| C16:1 | 1.0 |
| C17:0 | 0.1 |
| C17:1 | 0.1 |
| C18:0 | 6.7 |
| C18:1 | 40.4 |
| C18:2 | 35.7 |
| C18:3 | < 0.1 |
| C20:0 | 0.2 |
| C20:1 | 0.1 |
| C22:0 | < 0.1 |
| C22:1 | < 0.1 |
| C24:0 | 0.1 |
| C24:1 | < 0.1 |

Ladite huile de jatropha semi-raffinée est envoyée en mélange avec l'effluent paraffinique produit par le procédé Fischer-Tropsch dans une section d'hydrotraitement, à raison d'un débit de 60 g/h pour l'huile de jatropha semi raffinée et de 40 g/h pour la charge paraffinique issue de la synthèse Fischer-Tropsch.

Ledit mélange, dont le débit massique est de 100 g/h, est chauffée à une température de 150°C et mélangée avec un flux d'hydrogène correspondant à une quantité totale d'hydrogène mélangée à la charge telle que le ratio hydrogène/charge est de 800 NUL, puis envoyée dans une section d'hydrotraitement qui consiste en un réacteur en lit fixe où a été placé 100 cm³ d'un catalyseur d'hydrotraitement. La pression opératoire est de 50 bar rel (5 MPa rel). Le catalyseur utilisé dans la section hydrotraitement est un catalyseur NiMoP/alumine sulfuré comprenant 0,22 % poids de NiO, 21 % poids de MoO₃ et de 5% poids de P₂O₅ supporté sur une alumine gamma. Le catalyseur présente un rapport atomique Ni/Mo égal à 0,02. Ledit catalyseur est décrit dans le brevet FR 2 943 071.

Ledit catalyseur supporté est préparé par imprégnation à sec des précurseurs oxydes en solution puis sulfurés in-situ, à une température de 350 °C, préalablement au test à l'aide d'une charge gazole de distillation directe additivée de 2 % en poids diméthyldisulfure (DMDS). Après sulfuration in situ dans l'unité sous pression, la charge à traiter décrite dans le tableau 2 est envoyée dans le réacteur.

Afin de maintenir le catalyseur à l'état sulfure, on ajoute à la charge 50 ppm poids de soufre sous forme de DMDS. Dans les conditions de réactions, le DMDS est totalement décomposé pour former du méthane et de l'H₂S.

La température d'entrée dans la section d'hydrotraitement est de 200°C, et la température de l'effluent en sortie de réacteur est de 320°C.

### Étape c)

L'effluent issu de l'étape b) d'hydrotraitement est ensuite envoyé dans un séparateur qui permet de séparer l'eau, les gaz formés et en particulier le propane, le CO et le CO₂, l'H₂S, le NH₃ et de produire un effluent liquide dont les principales propriétés sont indiquées dans le tableau 3.

**Tableau 3 : Propriétés de l'effluent paraffinique en sortie d'hydrotraitement**

| | |
|---|---|
| Densité à 15°C (kg/m³) | 779,1 |
| Oxygène (% poids) | < 0,2 |
| Hydrogène (% poids) | 15,0 |
| Soufre (ppm poids) | < 2 |
| Azote (ppm poids) | < 2 |
| Distillation simulée (% poids) | |
| % m/m 150°C⁻ | 4,4 |
| % m/m 150 - 370°C | 84,7 |
| %m/m de 370°C+ | 10,9 |

### Étape d)

### Préparation du catalyseur d'hydrocraquage et d'hydroisomérisation.

La poudre de silice-alumine est préparée selon le protocole de synthèse décrit dans le brevet FR 2 639 256 (exemple 3). Les quantités d'acide orthosilicique et d'alcoolate d'aluminium sont choisies de manière à avoir une composition de 70% pds Al₂O₃ et 30% pds SiO₂ dans le solide final.

La poudre séchée est mise au contact d'une solution aqueuse d'acide nitrique, la quantité en acide nitrique étant de 5% en poids par rapport à la quantité de poudre et la quantité de solution aqueuse telle que la perte au feu à 550°C du gâteau obtenu soit d'environ 60% en poids. Ce gâteau est malaxé puis extrudé. Le malaxage se fait sur un malaxeur bras en Z. L'extrusion est réalisée par passage de la pâte au travers d'une filière munie d'orifices de diamètre 1,4 mm. Les extrudés ainsi obtenus sont séchés en étuve à 110°C puis calciné sous débit d'air sec (rampe de montée de 5°C/min). La température de calcination est ajustée de manière à obtenir une surface spécifique de 310 m²/g.

Les extrudés de silice-alumine sont ensuite soumis à une étape d'imprégnation à sec par une solution aqueuse d'acide hexachloroplatinique H₂PtCl₆, laissés à maturer en maturateur à eau durant 24 heures à température ambiante puis calcinés durant deux heures sous air sec en lit traversé à 500°C (rampe de montée en température de 5°C/min). La teneur pondérale en platine du catalyseur fini après calcination est de 0,70%.

Les caractéristiques du catalyseur ainsi préparé sont les suivantes :
- un diamètre moyen des mésopores de 6,5 nm,
- un volume poreux des pores dont le diamètre est compris entre le diamètre moyen tel que défini précédemment diminué de 3 nm et le diamètre moyen tel que défini précédemment augmenté de 3 nm égal à 60% du volume poreux total,
- un volume poreux total de 0,70 ml/g,
- un volume des macropores, dont le diamètre est supérieur à 50 nm représente 29% du volume poreux total
- une surface BET de 310 m²/g,
- une teneur en sodium de 110 +- 13 ppm en poids,
- une dispersion du métal noble de 85%,
- un coefficient de répartition du métal noble égal à 0,92.

### Hydroisomérisation/hydrocraquage de l'effluent paraffinique sur le catalyseur Pt/silice-alumine.

L'effluent paraffinique issu de l'étape c) est envoyé dans un réacteur où on a placé 100 cm³ du catalyseur d'hydrocraquage et d'hydroisomérisation à base de Pt sur silice-alumine décrit ci dessus. L'hydroisomérisation/hydrocraquage s'effectue en mode once-through sur une unité de type lixe fixe en isotherme fonctionnant en mode upflow.

Avant test, le catalyseur subit une étape de réduction dans les conditions opératoires suivantes :
- débit d'hydrogène pur : 1600 normaux litres par heure et par litre de catalyseur,
- montée de la température ambiante à 120°C : 10°C/min,
- palier d'une heure à 120°C,
- montée de 120°C à 450°C à 5°C/min,
- palier de deux heures à 450°C,
- pression : 0,1 MPa

Après réduction, le test catalytique s'effectue dans les conditions suivantes :
- pression totale de 5 MPa,
- rapport hydrogène sur charge de 800 normaux litres/litre,
- vitesse volumique horaire (WH) égale à 1 h⁻¹.

La température de réaction est ajustée à 345°C de manière à obtenir un niveau de conversion de la fraction 370°C⁺ égal à 70% en poids. Les analyses par distillation simulée permettent d'obtenir la distribution des différentes coupes dans l'effluent hydrocraqué.

Ces résultats figurent dans le tableau 4 dans lequel figure également la distribution des différentes coupes de la charge avant passage dans le réacteur d'hydroisomérisation/hydrocraquage.

**Tableau 4: distribution des différentes coupes de la charge et de l'effluent hydrocraqué.**

| | Effluent paraffinique issu de l'étape c) | effluent hydroisomérisé/hydrocraqué issu de l'étape d) |
|---|---|---|
| % m/m 150°C⁻ | 4,4 | 5,9 |
| % m/m 150 - 370°C | 84,7 | 90,8 |
| %m/m de 370°C+ | 10,9 | 3,3 |

L'étape d'hydroisomérisation/hydrocraquage permet d'augmenter le rendement en distillats moyens (coupe 150 - 370°C) de 84,7 à 90,8 % poids dans l'effluent final obtenu.

## Revendications

1. Procédé de production de distillats moyens à partir de charges issues, en tout ou partie, de sources renouvelables **caractérisé en ce que** ledit procédé comprend au moins les étapes suivantes :
a) la production d'un premier effluent paraffinique par le procédé Fischer-Tropsch à partir d'un gaz de synthèse (CO+H₂),
b) l'hydrotraitement d'au moins une partie dudit premier effluent paraffinique issu de l'étape a), en mélange avec une charge issue de source renouvelable choisie parmi les huiles et graisses d'origine végétale, animale, les huiles de poissons contenant des triglycérides et/ou des acides gras et les produits issus de la conversion de la biomasse lignocellulosique contenant une teneur supérieure à 80% poids d'acides gras libres, d'esters et de glycérides ou des mélanges de telles charges, en présence d'hydrogène et d'un catalyseur d'hydrotraitement, à une température comprise entre 150 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 150 et 1500 NI d'hydrogène par litre de charge, ledit effluent paraffinique issu de l'étape a) ne subit aucune étape de distillation avant d'etre introduit dans l'étape b) d'hydrotraitement,
c) l'élimination d'au moins une partie de l'eau de l'effluent issu de l'étape b) d'hydrotraitement,
d) l'hydroisomérisation/hydrocraquage de l'effluent issue de l'étape c) en présence d'hydrogène et d'un catalyseur d'hydroisomérisation/hydrocraquage comprenant de 0,05 à 10% en poids et d'au moins un métal noble du groupe VIII, déposé sur un support silice-alumine, sans aucun liant, contenant une quantité de silice comprise entre 1 et 95%, exprimée en pourcentage poids, ledit catalyseur présentant :
- une surface spécifique BET de 100 à 500 m2/g,
- un diamètre moyen des mésopores compris entre 3 et 12 nm,
- un volume poreux des pores dont le diamètre est compris entre le diamètre moyen tel que défini précédemment diminué de 3 nm et le diamètre moyen tel que défini précédemment augmenté de 3 nm supérieur à 40% du volume poreux total,
- un volume poreux total compris entre 0,4 et 1,2 ml/g,
- un volume des macropores, dont le diamètre est supérieur à 50 nm représentant entre 5 et 60% du volume poreux total,
- une teneur en composés alcalins ou alcalino-terreux inférieure à 300 ppm poids,
e) la distillation de l'effluent issu de l'étape d) d'hydroisomérisation/hydrocraquage pour séparer au moins une fraction distillats moyens.

2. Procédé selon la revendication 1 dans lequel ledit gaz de synthèse est produit à partir de gaz naturel selon la voie GTL aussi appelée selon la terminologie anglo-saxonne gas- to-liquid.

3. Procédé selon la revendication 1 dans lequel ledit gaz de synthèse est est produit à partir d'un gaz de synthèse produit à partir de charbon selon la voie CTL aussi appelée selon la terminologie anglo-saxonne coal- to-liquid.

4. Procédé selon la revendication 1 dans lequel ledit gaz de synthèse est produit à partir d'un gaz de synthèse produit à partir de biomasse selon la voie BTL aussi appelée selon la terminologie anglo-saxonne biomass- to-liquid.

5. Procédé selon l'une des revendications 1 à 4 dans lequel le rapport massique dudit effluent paraffinique produit par synthèse Fischer-Tropsch selon l'étape a) sur ladite charge issue de source renouvelable introduite dans l'étape b) d'hydrotraitement est compris entre 0,05 et 20.

6. Procédé selon l'une des revendications précédentes dans lequel l'adite étape d'élimination de l'eau est réalisée par séchage, passage sur un desséchant, flash, extraction par solvant, distillation et décantation ou par association d'au moins deux de ces méthodes.

7. Procédé selon l'une des revendications précédentes dans lequel l'étape d) d'hydroisomérisation / hydrocraquage opère à une température comprise entre 200 et 450°C, à une pression comprise entre 0,2 et 15 MPa, à une vitesse spatiale comprise entre 0,1 h⁻¹ et 10 h⁻¹ et en présence d'une quantité totale d'hydrogène telle que le ratio hydrogène/charge soit compris entre 100 et 2000 normaux litres d'hydrogène par litre de charge.

## Patentansprüche

1. Verfahren zur Herstellung von Mitteldestillaten aus Chargen, die zur Gänze oder teilweise aus erneuerbaren Quellen stammen, **dadurch gekennzeichnet, dass** das Verfahren mindestens die folgenden Schritte umfasst:
a) Herstellung eines ersten Paraffinabstroms durch das Fischer-Tropsch-Verfahren aus einem Synthesegas (CO+H₂),
b) Hydrobehandlung mindestens eines Teils des ersten Paraffinabstroms aus Schritt a) im Gemisch mit einer Charge, die aus einer erneuerbaren Quelle stammt, die ausgewählt ist unter den Ölen und den Fetten pflanzlichen, tierischen Ursprungs, den Fischölen, umfassend Triglyceride und/oder Fettsäuren, und den Produkten, die aus der Umwandlung der lignozellulosehaltigen Biomasse stammen, mit einem Gehalt über 80 Gew.-% von Fettsäuren, Estern und Glyceriden oder Gemischen solcher Füllstoffe, im Beisein von Wasserstoff und eines Katalysators zur Hydrobehandlung bei einer Temperatur zwischen 150 und 450 °C, bei einem Druck zwischen 1 MPa und 10 MPa, bei einer Raumgeschwindigkeit pro Stunde zwischen 0,1 h⁻¹ und 10 h⁻¹ und im Beisein einer Gesamtwasserstoffmenge im Gemisch mit dem Füllstoff, so dass das Verhältnis Wasserstoff/Füllstoff zwischen 150 und 1500 NI Wasserstoff pro Liter Charge beträgt, wobei der Paraffinabstrom aus Schritt a) keinem Destillationsschritt unterzogen wird, bevor er in den Schritt b) der Hydrobehandlung eingeleitet wird,
c) Beseitigung mindestens eines Teils des Wassers aus dem Abstrom aus dem Schritt b) der Hydrobehandlung,
d) Hydroisomerisation/Hydrocracking des Abstroms aus Schritt c) im Beisein von Wasserstoff und eines Hydroisomerisations-/Hydrocracking-Katalysators, umfassend 0,05 bis 10 Gew.-% mindestens eines Edelmetalls der Gruppe VIII, aufgebracht auf einen Silizium-Aluminiumoxidträger ohne jegliches Bindemittel, mit einer Menge an Siliziumoxid zwischen 1 und 95 %, ausgedrückt in Gewichtsprozent, wobei der Katalysator umfasst:
- eine spezifische BET-Oberfläche von 100 bis 500 m²/g,
- einen durchschnittlichen Durchmesser der Mesoporen zwischen 3 und 12 nm,
- ein Porenvolumen der Poren, deren Durchmesser zwischen dem durchschnittlichen Durchmesser, wie vorher definiert, verringert um 3 nm und dem durchschnittlichen Durchmesser, wie vorher definiert, erhöht um 3 nm liegt, von mehr als 40 % des Gesamtporenvolumens,
- ein Gesamtporenvolumen zwischen 0,4 und 1,2 ml/g,
- ein Volumen der Makroporen, deren Durchmesser größer als 50 nm ist, das zwischen 5 und 60 % des Gesamtporenvolumens darstellt,
- einen Gehalt an alkalischen oder erdalkalischen Verbindungen unter 300 ppm Gewicht,
e) Destillation des Abstroms aus dem Schritt d) der Hydroisomerisation/Hydrocracking, um zumindest eine Mitteldestillatfraktion abzutrennen.

2. Verfahren nach Anspruch 1, bei dem das Synthesegas aus Erdgas auf dem GTL-Weg, nach der angelsächsischen Terminologie auch gas-to-liquid genannt, hergestellt wird.

3. Verfahren nach Anspruch 1, bei dem das Synthesegas aus einem Synthesegas hergestellt wird, das aus Kohle auf dem CTL-Weg, nach der angelsächsischen Terminologie auch coal-to-liquid genannt, hergestellt wird.

4. Verfahren nach Anspruch 1, bei dem das Synthesegas aus einem Synthesegas hergestellt wird, das aus Biomasse auf dem BTL-Weg, nach der angelsächsischen Terminologie auch biomass-to-liquid genannt, hergestellt wird.

5. Verfahren nach einem der Ansprüche 1 bis 4, bei dem das Massenverhältnis des Paraffinabstroms, der durch Fischer-Tropsch-Synthese nach Schritt a) hergestellt wird, zu der Charge, die aus der erneuerbaren Quelle stammt und in dem Schritt b) der Hydrobehandlung eingeleitet wird, zwischen 0,05 und 20 liegt.

6. Verfahren nach einem der vorhergehenden Ansprüche, bei dem der Schritt der Beseitigung des Wassers durch Trocknung, Verwendung eines Trocknungsmittels, Flash, Extraktion durch ein Lösungsmittel, Destillation und Dekantierung oder durch Verbindung mindestens zweier dieser Methoden durchgeführt wird.

7. Verfahren nach einem der vorhergehenden Ansprüche, bei dem der Schritt d) der Hydroisomerisation/Hydrocracking bei einer Temperatur zwischen 200 und 450 °C, bei einem Druck zwischen 0,2 und 15 MPa, bei einer Raumgeschwindigkeit zwischen 0,1 h⁻¹ und 10 h⁻¹ und im Beisein einer Gesamtwasserstoffmenge durchgeführt wird, dass das Verhältnis Wasserstoff/Charge zwischen 100 und 2000 Normliter Wasserstoff pro Liter Charge beträgt.

## Claims

1. A process for producing middle distillates from feedstocks resulting in whole or in part from renewal sources, **characterised in that** said process comprises at the least the following steps:
a) production of a first paraffinic effluent by the Fischer-Tropsch process from a synthesis gas (CO+H₂),
b) hydrotreatment of at least a portion of said first paraffinic effluent from step a), in a mixture with a feedstock from a renewable source selected from oils and greases of vegetable and animal origin, fish oils containing triglycerides and/or fatty acids and products from the conversion of lignocellulosic biomass containing a proportion higher than 80% by weight of free fatty acids, esters and glycerides or mixtures of such feedstocks, in the presence of hydrogen and a hydrotreatment catalyst, at a temperature of between 150 and 450°C, at a pressure of between 1 MPa and 10 MPa, at an hourly space velocity of between 0.1 h⁻¹ and 10 h⁻¹ and in the presence of a total amount of hydrogen mixed with the feedstock such that the hydrogen/feedstock ratio is between 150 and 1500 NI of hydrogen per litre of feedstock, said paraffinic effluent from step a) does not undergo any distillation step before being introduced into the hydrotreatment step b),
c) elimination of at least a portion of the water from the effluent from the hydrotreatment step b),
d) hydroisomerisation/hydrocracking of the effluent from step c) in the presence of hydrogen and a hydroisomerisation/hydrocracking catalyst comprising 0.05 to 10% by weight and at least one noble metal from group VIII deposited on a silica-alumina support, without any binder, containing an amount of silica of between 1 and 95%, expressed as a percentage by weight, said catalyst having:
- a BET specific surface area of 100 to 500 m²/g,
- a mean diameter of the mesopores of between 3 and 12 nm,
- a porous volume of the pores whose diameter is between the mean diameter as defined hereinbefore reduced by 3 nm and the mean diameter as defined hereinbefore increased by 3 nm greater than 40% of the total porous volume,
- a total porous volume of between 0.4 and 1.2 ml/g,
- a volume of the macropores whose diameter is greater than 50 nm representing between 5 and 60% of the total porous volume, and
- a proportion of alkali or alkaline-earth metal compounds of less than 300 ppm by weight,
e) distillation of the effluent from the hydroisomerisation/hydrocracking step d) to separate at least a middle distillates fraction.

2. A process according to claim 1 wherein said synthesis gas is produced from natural gas using the GTL route, also referred to as Gas-To-Liquid.

3. A process according to claim 1 wherein said synthesis gas is produced from a synthesis gas produced from coal using the CTL route, also referred to as Coal-To-Liquid.

4. A process according to claim 1 wherein said synthesis gas in produced from a synthesis gas produced from biomass using the BTL route, also referred to as Biomass-To-Liquid.

5. A process according to one of claims 1 to 4 wherein the ratio by mass of said paraffinic effluent produced by Fischer-Tropsch synthesis in accordance with step a) to said feedstock from a renewable source introduced into the hydrotreatment step b) is between 0.05 and 20.

6. A process according to one of the preceding claims wherein said water elimination step is implemented by drying, passing it over a drying agent, flash, solvent extraction, distillation and decantation or by the association of at least two of those methods.

7. A process according to one of the preceding claims wherein the hydroisomerisation/hydrocracking step d) operates at a temperature of between 200 and 450°C, at a pressure of between 0.2 and 15 MPa, an hourly space velocity of between 0.1 h⁻¹ and 10 h⁻¹ and in the presence of a total amount of hydrogen such that the hydrogen/feedstock ratio is between 100 and 2000 normal litres of hydrogen per litre of feedstock.
